# EUROPÄISCHE PATENTSCHRIFT

(11) **EP 3 610 335 B1**
(45) Veröffentlichungstag und Bekanntmachung des Hinweises auf die Patenterteilung: **21.06.2023**
(21) Anmeldenummer: 17737537.5
(22) Anmeldetag: 04.07.2017
(51) Int. Cl.: G05B 9/02, H01H 3/02, H01H 9/18, H01H 13/02

(54) **NOTHALT-VORRICHTUNG FÜR EINE AUTOMATISIERUNGSANLAGE**
EMERGENCY STOP MECHANISM FOR AN AUTOMATION PLANT
DISPOSITIF D'ARRÊT D'URGENCE POUR UNE INSTALLATION D'AUTOMATISATION

(43) Veröffentlichungstag der Anmeldung: 19.02.2020
(73) Patentinhaber: Siemens Aktiengesellschaft, 80333 München (DE)
(72) Erfinder: GRAF, Rene, 90513 Zirndorf (DE); MEYER, Thomas Alexander, 90471 Nürnberg (DE)
(74) Vertreter: Siemens Patent Attorneys
(86) Internationale Anmeldenummer: PCT/EP2017/066604
(87) Internationale Veröffentlichungsnummer: WO 2019/007482

(56) Entgegenhaltungen:
- EP-A1- 2 657 949
- EP-A2- 1 842 991
- DE-A1-102007 019 505
- DE-A1-102014 113 135
- US-A1- 2016 346 919

## Beschreibung

Nothalt-Vorrichtung für eine Automatisierungsanlage mit modularem Aufbau aufweisend einen Taster sowie ein Anschlussmodul.

In einer Automatisierungsanlage müssen Nothalt-Taster inklusive des Anschlussmoduls deutlich erkennbar positioniert sein. Diese Maßgabe lässt sich insbesondere durch die Farbgebung umsetzen. Dabei ist der Nothalt-Taster selbst rot und die benachbarte Grundfläche des Anschlussmoduls gelb gefärbt. Die Grundfläche ist in den Endgeräten üblicherweise konzentrisch oder als Fläche eines Quaders ausgebildet.

Bei der Konzeption einer Nothalt-Vorrichtung muss zusätzlich auch die Norm DIN EN ISO 13850 berücksichtigt werden, die besagt, dass die Vorrichtung zwingend in jeder Situation funktionieren muss. Im Mittelpunkt steht dabei die Gewissheit, eine Gefahrensituation vollständig beendet zu haben.

In modularen Anlagen, welche sich dadurch auszeichnen, dass einzelne Produktionsmodule mit einer zentralen Transporteinheit verbunden sind und davon auch wieder getrennt werden können, besteht das Problem, dass bei einem separierten Modul der Nothalt-Taster immer noch deutlich sichtbar ist, aber für die Anlage ohne Funktion ist. Für den Fall, dass das funktionslose Modul deutlich von der Anlage getrennt platziert ist, kann die Funktionslosigkeit ohne Probleme erkannt werden. Denkbar ist jedoch auch eine Situation, in welcher das Modul elektronisch von der Anlage getrennt ist, aber nicht von dieser deutlich sichtbar separiert wurde.

Eine naheliegende Lösung ist die aktive Beleuchtung des Nothalt-Tasters. Die technische Umsetzung dieser aktiven Beleuchtung kann durch eine rot gefärbte Hülle des Tasters erfolgen, oder sie ist durchsichtig ausgeführt und die Lampe im Inneren ist gefärbt. Die gelbe Grundfläche des Anschlussmoduls folgt demselben technischen Konzept.

Die DE 10 2014 113135 A1 beschreibt eine Nothalt-Vorrichtung für eine Automatisierungsanlage mit modularem Aufbau aufweisend einen Taster sowie ein Anschlussmodul, wobei der Taster mit einer Beleuchtung mit zustandsabhängigen Leuchtmitteln überzogen ist.

Aus der EP 1 842 991 geht ein Nottasterterminal hervor, der eine lichtemittierende Anzeige aufweist, wobei die Anzeige im aktivierten Zustand eine richtungsweisende Anzeigefigur anzeigt. Das Nottasterterminal weist ein Gehäuse auf, an dessen Oberseite ein Nottaster angeordnet ist. Der Nottaster ist von einer Anzeige umgeben, die sich aus vier balkenförmigen Einzelanzeigeelementen und vier Teilanzeigen zusammensetzt. Das Gehäuse weist ferner im Inneren eine Steuereinheit und Mittel zur Energieversorgung auf.

Diese aus dem Stand der Technik bekannte Lösung einer aktiven Beleuchtung ist aber nicht zulässig, da der Unterschied zu einem situationsunabhängig ausgerichteten Nothalt-Taster zu gering ist, so dass eine Bedienung ohne Funktion nach wie vor möglich ist.

Derzeitig besteht die einzige, normgeprüfte, zulässige Lösung darin, den Nothalt-Taster hinter einer Klappe oder Haube zu verdecken, wenn dieser inaktiv ist. Diese Klappe/Haube muss dabei so ausgelegt sein, dass sie bei fehlender Betriebsspannung des Moduls automatisch schließt und den Taster verdeckt.

Demgemäß besteht die Aufgabe der vorliegenden Erfindung darin, eine Nothalt-Vorrichtung für eine Automatisierungsanlage mit modularem Aufbau zu schaffen, welche eine erkennbar sichere und zuverlässige Bedienung der Automatisierungsanlage in einer Gefahrensituation ermöglicht.

Diese Aufgabe wird erfindungsgemäß durch eine Nothalt-Vorrichtung für eine Automatisierungsanlage mit modularem Aufbau mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch eine Nothalt-Vorrichtung für eine Automatisierungsanlage mit modularem Aufbau aufweisend einen Taster sowie ein Anschlussmodul gelöst. Die Erfindung zeichnet sich dabei dadurch aus, dass der Taster und die zum Taster benachbarte Fläche des Anschlussmoduls in Form eines Displays als Beleuchtung mit OLEDs als zustandsabhängige Leuchtmittel überzogen sind.

Der Kern der Erfindung besteht in einer neuartigen Farbgebung der Nothalt-Vorrichtung, insbesondere des Tasters und der zum Taster benachbarten Fläche des Anschlussmoduls, welche eine fehlerhafte Erkennung eines Nothalt-Tasters sicher ausschließt, aber dennoch ohne zusätzliche mechanische Komponenten auskommt. Dazu werden sowohl der Taster als auch die Fläche mit OLEDs (Organic Light Emitting Diode) überzogen, welche in zahlreichen, kundenspezifischen Endgeräten z.B. in Displays von Mobilfunkgeräten zum Einsatz kommen und somit auch nicht kostenintensiv sind.

Eine weitere Varianz ergibt sich bei OLEDs dadurch, dass sie auch in anderen Formen und nicht nur als ebene, rechteckige Flächen hergestellt werden können, so dass eine Formgebung für den Taster problemlos möglich ist, zumal die exakte Form des Tasters nicht definiert ist. Ebenso wie bei den mobilen Kommunikationsendgeräten kann eine durchsichtige, aber sehr stabile Schutzhülle, insbesondere Gorillaglas, darüber gelegt werden, um das OLED vor Kratzern oder anderen Beschädigungen zu schützen.

Die Funktionsweise der erfindungsgemäßen Nothalt-Vorrichtung besteht darin, dass bei einem inaktiven Taster bzw. bei einem von der Stromversorgung getrennten Modul leuchtet das OLED nicht und ist somit komplett schwarz, so dass eine Verwechselungsgefahr mit einem aktiv an die Stromversorgung angebundenen Nothalt-Taster definitiv ausgeschlossen ist. Im aktiven Modus wird das OLED des Tasters mit Spannung versorgt und leuchtet homogen rot für den Taster bzw. gelb für die Grundfläche. Herstellungstechnisch ergibt sich durch die monochrome Farbe ein einfacher Prozess, welcher durch die Ansteuerung des OLEDs zudem deutlich einfacher als bei einem Display ist, welches konzeptionell eine Bilderpräsentation ermöglicht.

Konstruktiv sollte der Taster der erfindungsgemäßen Nothalt-Vorrichtung vorzugsweise einen geringen Krümmungsradius aufweisen, so dass die Integration der OLEDs besonders einfach ist. Außerdem besteht ein weiterer Vorteil darin, dass die mechanischen Komponenten im Inneren des Tasters baugleich und damit identisch zu den bisherigen Nothalt-Tastern mit aktiver Beleuchtung sind. Die erfindungsgemäße Lösung in Form von OLEDs betrifft konstruktiv ausschließlich das Gehäuse und nicht die üblichen Funktionsbauteile innerhalb des Gehäuses.

Die bisher beschriebene Ausführung setzt voraus, dass die Signale des Nothalt-Tasters bei vorhandener Betriebsspannung des Moduls mit der zentralen Sicherheitssteuerung verbunden sind. Dies liegt bei dedizierten Signalleitungen für den Nothalt-Taster vor.

Bei einer sicheren Kommunikationselektronik werden die Signale des Nothalt-Tasters hingegen nur über die Kommunikationstechnik, also über eine fehlersichere Peripherie-Baugruppe, an die Steuerung übermittelt. Für den Fall, dass die Aktivierung des OLED vom Anschluss an den Ausgang einer fehlersicheren, digitalen Ausgabe-Baugruppe abhängig ist und nicht vom Anschluss an eine Betriebsspannung, darf der Taster erst in seinen Farben leuchten, wenn auch die kommunikationstechnische Anbindung der Peripherie an die fehlersichere Steuerung aktiv ist. Hierbei wird der Taster bei einem Abbruch der Kommunikation, obwohl nach wie vor eine Betriebsspannung anliegt, automatisch als nicht funktionsfähig gekennzeichnet, wodurch die Anlagen-Sicherheit insgesamt erhöht wird.

Eine nicht beanspruchte, alternative Möglichkeit besteht darin, elektronische Tinte zu verwenden, wobei dann sichergestellt sein muss, dass bei Wegfall der Betriebsspannung die optische Darstellung des Tasters und der benachbarten Fläche des Moduls von rot bzw. gelb in schwarz wechselt. Da die elektronische Tinte die Betriebsspannung nur zur Zustandsänderung benötigt, muss eine entsprechende Pufferung vorliegen. In Bezug auf die Flexibilität des Displays ist elektronische Tinte sogar noch ein wenig besser geeignet als ein OLED, wobei die Anforderungen an die darüber liegende Schutzhülle identisch sind.

3. Ein Vorteil dieser nicht beanspruchten Alternative wäre, dass die erfindungsgemäße Nothalt-Vorrichtung für eine modulare Anlage ohne zusätzliche mechanische Komponenten wie Klappen oder Hauben inklusive deren Ansteuerung umgesetzt werden kann. Zudem ist eine Verwechselung mit einem Nothalt-Taster im aktiven Modus, aber im spannungsfreien Zustand definitiv ausgeschlossen, da die rote bzw. gelbe Farbgebung des OLED komplett verschwindet und in schwarz übergeht, während bei den nicht zulässig beleuchteten Tastern die Farbe aufgrund der Umgebungsbeleuchtung nicht eindeutig ist.

Für den Fall, dass die Aktivierung des OLED-basierten Nothalt-Tasters nicht an die Betriebsspannung, sondern an den Ausgang einer fehlersicheren Peripherie angeschlossen ist, kann er auch für die kommunikationstechnische Übertragung des Nothalt-Signals verwendet werden und schaltet optisch bei Wegfall der Kommunikationsverbindung entsprechend der Norm. Ein besonderes Detail dieses erfindungsgemäßen Nothalt-Tasters kann darin bestehen, dass der OLED-basierte Nothalt-Taster im Inneren der roten Fläche oder auf der gelben Fläche weitere Informationen anzeigen kann, beispielsweise Fluchtwege oder die bei einer Gefahrensituation anzurufende Telefonnummer. Diese Informationen sind dann natürlich in unterschiedlichen Sprachen darstellbar.

Der Norm entsprechend darf der erfindungsgemäße Taster keine Zusatzinformationen darstellen, solange er für das Auslösen des Nothalts eindeutig erkennbar sein muss. Nachdem der Nothalt aber bereits ausgelöst wurde, unabhängig davon, ob an diesem oder einem anderen Taster, kann das OLED genau für diese eingetretene Notfallsituation weitere Informationen darstellen, die nach Beendigung des Notfalls wieder unsichtbar auf der roten Fläche vorliegt.

Außerdem kann im Fall einer Notfallsituation auf allen von diesem Ereignis betroffenen Tastern diese Information dargestellt werden, so dass auch Personen, die sich nicht unmittelbar in der Nähe des Vorfalls aufhalten, beispielsweise über die Fluchtwege informiert sind.

Ein weiterer Gesichtspunkt dieser Erfindung besteht in der Weiterentwicklung des für die Industrie konzipierten Zukunftsprojekts Industrie 4.0, welches von einem modularen Anlagenaufbau ausgeht. Bisher sind dies eher Forschungsanlagen, wobei das Thema Nothalt nur sehr eingeschränkt betrachtet wurde. Für den Fall, dass diese Anlagen jedoch für den realen Herstellungsprozess genutzt werden sollen, muss das Problem der sichtbaren, aber nicht aktiven Nothalt-Taster in den einzelnen Modulen gelöst werden. Dazu liefert der hier vorgestellte erfindungsgemäße, OLED-basierte Nothalt-Taster einen Beitrag.

Das erfindungsgemäße Konzept besteht darin, dass der Taster und die zum Taster benachbarte Fläche des Anschlussmoduls in Form eines Displays als Beleuchtung mit zustandsabhängigen Leuchtmitteln überzogen sind.

Erfindungsgemäß sind der Taster und die zum Taster benachbarte Fläche des Anschlussmoduls für die Beleuchtung mit OLEDs überzogen.

Eine Fortführung des erfindungsgemäßen Konzepts kann darin bestehen, dass eine Schutzhülle über die mit OLEDs versehenen Bereiche, also über den Taster und die benachbarte Fläche des Anschlussmoduls ausgebildet ist.

Eine spezielle Ausgestaltung dieses erfindungsgemäßen Konzepts kann darin bestehen, dass die mit OLEDs versehenen Bereiche im aktiven und im inaktiven Zustand eine unterschiedliche Farbgebung aufweisen.

Eine weitere mögliche Ausgestaltung der Erfindung kann vorsehen, dass bei einer Anlage mit integrierter Kommunikationselektronik eine Stromversorgung an einen Ausgang einer fehlersicheren, digitalen Ausgabe-Baugruppe ausgebildet ist.

Eine Fortführung des erfindungsgemäßen Konzepts kann darin bestehen, dass beleuchtungsspezifische Merkmale der Nothalt-Vorrichtung an der Außenseite des Gehäuses positioniert sind, so dass die Funktionsbauteile im Gehäuseinneren den serienüblichen Einzelmodulen entsprechen.

Eine spezielle Ausgestaltung dieses erfindungsgemäßen Konzepts kann darin bestehen, dass die Nothalt-Vorrichtung im aktiven Modus auf dem beleuchteten Display des Tasters zusätzliche Informationen aufweist.

Die erfindungsgemäße Nothalt-Vorrichtung weist einen Taster auf, welcher an einem modularen Anschlussmodul positioniert ist. Der Taster ist dabei vorzugsweise als konzentrischer Druckknopf ausgebildet, welcher an einem vorzugsweise quaderförmigen Anschlussmodul befestigt ist. Das Anschlussmodul weist eine zum Taster benachbarte Fläche auf, welche der dem Bediener zugewandten Frontseite des Anschlussmoduls entspricht. Der Taster und die zum Taster benachbarte Fläche des Anschlussmoduls sind für die Beleuchtung mit OLEDs überzogen, wobei die Beleuchtung des Tasters und der benachbarten Fläche des Anschlussmoduls auch in Form von elektronischer Tinte ausgebildet sein kann. Zusätzlich kann eine Schutzhülle über die mit OLEDs versehenen Bereiche, also über den Taster und die benachbarte Fläche des Anschlussmoduls ausgebildet sein.

Es ist erfindungsgemäß vorgesehen, dass die mit OLEDs versehenen Bereiche im aktiven und im inaktiven Zustand eine unterschiedliche Farbgebung aufweisen. Beispielsweise kann die erfindungsgemäße Nothalt-Vorrichtung im spannungsfreien Modus in einer schwarzen Farbgebung ausgebildet sein und im spannungsaktiven Zustand rot mit einer gelb ausgeführten Fläche des Anschlussmoduls.

Bei der Stromanbindung der Vorrichtung kann es vorgesehen sein, dass der Stromkreis bei der Anbindung an eine Betriebsspannung für die Nothalt-Vorrichtung in separaten Signalleitungen ausgebildet ist. Der weitere Anwendungsfall geht davon aus, dass bei einer Anlage mit integrierter Kommunikationselektronik eine Stromversorgung an einen Ausgang einer fehlersicheren, digitalen Ausgabe-Baugruppe ausgebildet ist. Insbesondere ist die Möglichkeit vorgesehen, dass die Nothalt-Vorrichtung im aktiven Modus auf dem beleuchteten Display des Tasters zusätzliche Informationen aufweist.

Weitere Ausführungen und Vorteile der Erfindung werden nachfolgend anhand eines Ausführungsbeispiels sowie anhand der Zeichnung erläutert.

Dabei zeigen:
Fig. 1 in einer perspektivischen Darstellung zwei aus dem Stand der Technik bekannte Ausführungsbeispiele für eine Nothalt-Vorrichtung;
Fig. 2 in einer perspektivischen Darstellung eine erfindungsgemäße Nothalt-Vorrichtung im spannungsfreien Modus mit einer Beleuchtung, welche auf OLEDs basiert;
Fig. 3 in einer perspektivischen Darstellung eine erfindungsgemäße Nothalt-Vorrichtung im spannungsaktiven Modus mit der Beleuchtungseinrichtung nach Fig. 3;
Fig. 4 in einer schematischen Darstellung eine erfindungsgemäße, auf OLEDs basierende Nothalt-Vorrichtung mit Zusatzinformationen im Display.

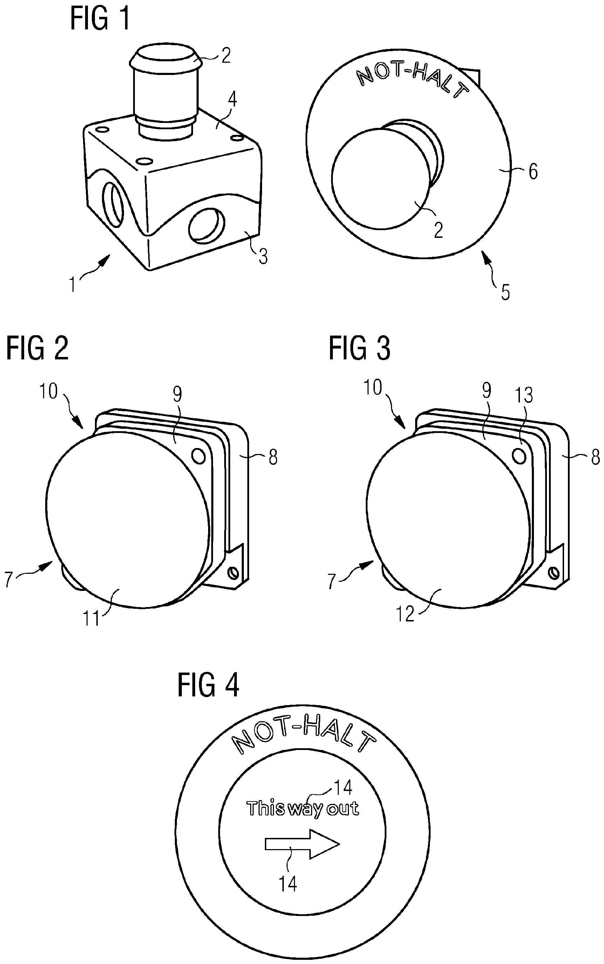

In Fig. 1 sind zwei aus dem Stand der Technik bekannte Ausführungsbeispiele für eine Nothalt-Vorrichtung dargestellt. Das erste Ausführungsbeispiel 1 zeigt einen Taster 2 mit quaderförmigem Anschlussmodul 3, wobei die dem Bediener zugewandte Frontseite 4 des Anschlussmoduls 3 gelb gefärbt ist und der Taster 2 rot. Das zweite Ausführungsbeispiel 5 zeigt ebenfalls einen rot gefärbten Taster 2, wobei die gelbe Fläche hier in Form eines Kragens 6 ausgebildet ist. Diese aus den Stand der Technik bekannte Lösung weist eine aktive Beleuchtung auf.

Fig. 2 zeigt eine erfindungsgemäße Nothalt-Vorrichtung im spannungsfreien Modus mit einer Beleuchtung, welche auf OLEDs basiert. Die erfindungsgemäße Nothalt-Vorrichtung weist einen Taster 7 auf, welcher an einem modularen Anschlussmodul 8 positioniert ist. Der Taster 7 ist dabei vorzugsweise als konzentrischer Druckknopf ausgebildet, welcher an einem vorzugsweise quaderförmigen Anschlussmodul 8 befestigt ist. Das Anschlussmodul 8 weist eine zum Taster 7 benachbarte Fläche 9 auf, welche der dem Bediener zugewandten Frontseite des Anschlussmoduls 8 entspricht. Der Taster 7 und die zum Taster 7 benachbarte Fläche 9 des Anschlussmoduls 8 sind für die Beleuchtung mit OLEDs überzogen, wobei die Beleuchtung des Tasters 7 und der benachbarten Fläche 9 des Anschlussmoduls 8 auch in Form von elektronischer Tinte ausgebildet sein kann. Zusätzlich kann eine Schutzhülle 10 über die mit OLEDs versehenen Bereiche, also über den Taster 7 und die benachbarte Fläche 9 des Anschlussmoduls 8 ausgebildet sein.

Es ist erfindungsgemäß vorgesehen, dass die mit OLEDs versehenen Bereiche im aktiven und im inaktiven Zustand eine unterschiedliche Farbgebung aufweisen. Beispielsweise kann die erfindungsgemäße Nothalt-Vorrichtung im spannungsfreien Modus in einer schwarzen Farbgebung 11 ausgebildet sein.

Bei der Stromanbindung der Vorrichtung kann es vorgesehen sein, dass der Stromkreis bei der Anbindung an eine Betriebsspannung für die Nothalt-Vorrichtung in separaten Signalleitungen ausgebildet ist. Ein weiterer Anwendungsfall geht davon aus, dass bei einer Anlage mit integrierter Kommunikationselektronik eine Stromversorgung an einen Ausgang einer fehlersicheren, digitalen Ausgabe-Baugruppe ausgebildet ist. Insbesondere ist die Möglichkeit vorgesehen, dass die Nothalt-Vorrichtung im aktiven Modus auf dem beleuchteten Display des Tasters zusätzliche Informationen aufweist.

In Fig. 3 ist eine erfindungsgemäße Nothalt-Vorrichtung im spannungsaktiven Modus mit der Beleuchtungseinrichtung nach Fig. 3 dargestellt, wobei bei angelegter Spannung der Taster 7 eine rote Farbgebung 12 aufweist, wobei das Anschlussmodul 7 eine gelbe Farbgebung 13 für die benachbarte Fläche zeigt.

Fig. 4 zeigt eine erfindungsgemäße auf OLEDs basierende Nothalt-Vorrichtung mit Zusatzinformationen 14 im Display. Insbesondere ist die Möglichkeit vorgesehen, dass die Nothalt-Vorrichtung im aktiven Modus auf dem beleuchteten Display des Tasters 7 zusätzlich Informationen aufweist, beispielsweise durch Anzeige der Richtung für den Fluchtweg.

Die erfindungsgemäße Nothalt-Vorrichtung zeichnet sich dadurch aus, dass diese Vorrichtung für eine modulare Anlage ohne zusätzliche mechanische Komponenten wie Klappen oder Hauben inklusive deren Ansteuerung umgesetzt werden kann. Zudem ist eine Verwechselung mit einem Nothalt-Taster im aktiven Modus, aber im spannungsfreien Zustand definitiv ausgeschlossen, da die rote bzw. gelbe Farbgebung des OLEDs komplett verschwindet und in schwarz übergeht, während bei den nicht zulässig beleuchteten Tastern die Farbe aufgrund der Umgebungsbeleuchtung nicht eindeutig ist.

### Bezugszeichenliste

- 1: erstes Ausführungsbeispiel
- 2: Taster
- 3: Anschlussmodul
- 4: Frontseite
- 5: zweites Ausführungsbeispiel
- 6: Kragen
- 7: Taster
- 8: Anschlussmodul
- 9: benachbarte Fläche
- 10: Schutzhülle
- 11: schwarze Farbgebung
- 12: rote Farbgebung
- 13: gelbe Farbgebung
- 14: Zusatzinformation

## Patentansprüche

1. Nothalt-Vorrichtung für eine Automatisierungsanlage mit modularem Aufbau aufweisend einen Taster (7) sowie ein Anschlussmodul (8), **dadurch gekennzeichnet, dass** der Taster (7) und die zum Taster (7) benachbarte Fläche (9) des Anschlussmoduls (8) in Form eines Displays als Beleuchtung mit zustandsabhängigen Leuchtmitteln überzogen sind, wobei der Taster (7) und die zum Taster (7) benachbarte Fläche (9) des Anschlussmoduls (8) für die Beleuchtung mit OLEDs überzogen sind.

2. Nothalt-Vorrichtung nach Anspruch 1, **dadurch gekennzeichnet, dass** eine Schutzhülle (10) über die mit OLEDs versehenen Bereiche, also über den Taster (7) und die benachbarte Fläche (9) des Anschlussmoduls (8) ausgebildet ist.

3. Nothalt-Vorrichtung nach einem der Ansprüche 1 oder 2, **dadurch gekennzeichnet, dass** die mit OLEDs versehenen Bereiche im aktiven und im inaktiven Zustand unterschiedliche Farbgebungen (11, 12, 13) aufweisen.

## Claims

1. Emergency stop apparatus for an automated plant with a modular construction, having a button (7) and a connection module (8), **characterized in that** the button (7) and the surface (9) of the connection module (8) that lies adjacent to the button (7) are coated with state-dependent light-emitting means in the form of a display as illumination, wherein the button (7) and the surface (9) of the connection module (8) that lies adjacent to the button (7) are coated with OLEDs for illumination.

2. Emergency stop apparatus according to Claim 1, **characterized in that** a protective covering (10) is formed over the regions provided with OLEDs, that is to say over the button (7) and the adjacent surface (9) of the connection module (8).

3. Emergency stop apparatus according to either of Claims 1 and 2, **characterized in that** the regions provided with OLEDs have different colorations (11, 12, 13) in the active and in the inactive state.

## Revendications

1. Dispositif d'arrêt d'urgence pour une installation d'automatisation à structure modulaire, présentant un bouton-poussoir (7) ainsi qu'un module de raccordement (8), **caractérisé en ce que** le bouton-poussoir (7) et la surface (9) du module de raccordement (8) voisine du bouton-poussoir (7) sont recouverts de moyens source de lumière en fonction de la situation sous la forme d'un signal visuel servant d'éclairage, le bouton-poussoir (7) et la surface (9) du module de raccordement (8) voisine du bouton-poussoir (7) étant recouverts d'OLED pour l'éclairage.

2. Dispositif d'arrêt d'urgence selon la revendication 1, **caractérisé en ce qu'**une enveloppe de protection (10) est formée sur les zones pourvues d'OLED, c'est-à-dire sur le bouton-poussoir (7) et la surface voisine (9) du module de connexion (8) .

3. Dispositif d'arrêt d'urgence selon l'une des revendications 1 ou 2, **caractérisé en ce que** les zones pourvues d'OLED présentent des colorations différentes (11, 12, 13) à l'état actif et à l'état inactif.
